# EUROPÄISCHE PATENTANMELDUNG

(11) **EP 3 311 985 A1**
(43) Veröffentlichungstag der Anmeldung: **25.04.2018**
(21) Anmeldenummer: 17174398.2
(22) Anmeldetag: 02.06.2017
(51) Int. Cl.: B29C 64/357, B29C 64/153, B22F 3/105, B07B 7/01, B07B 7/04

(54) **VORRICHTUNG ZUR ADDITIVEN HERSTELLUNG DREIDIMENSIONALER BAUTEILE**

(30) Priorität: 18.10.2016 DE 102016119849
(71) Anmelder: CL Schutzrechtsverwaltungs GmbH, 96215 Lichtenfels (DE)
(72) Erfinder: HERZOG, Frank, 96215 Lichtenfels (DE); DR. BECHMANN, Florian, 96215 Lichtenfels (DE); Dr. Pontiller-Schymura, Peter, 95512 Neudrossenfeld (DE)
(74) Vertreter: Kohl, Fabian Hanno

(57) **Zusammenfassung**

Vorrichtung (1) zur additiven Herstellung dreidimensionaler Bauteile durch sukzessives schichtweises selektives Belichten und damit einhergehendes Verfestigen von Baumaterialschichten aus einem vermittels eines Energiestrahls (5) verfestigbaren Baumaterial (3) in einer Prozesskammer (7), wobei die Prozesskammer (7) von einer von einer Strömungserzeugungseinrichtung (9) erzeugten, insbesondere inerten, Gasströmung durchströmbar oder durchströmt ist, wobei durch die Gasströmung und prozessbedingt entstehende Baumaterialpartikel ein Partikel-Gemisch (10) ausbildbar oder ausgebildet ist, wobei das Partikel-Gemisch (10) wenigstens drei, sich in wenigstens einem Baumaterialpartikelparameter, insbesondere der Partikelgröße und/oder Partikeldichte, unterscheidende Baumaterialpartikelfraktionen (11 - 13) beinhaltet, umfassend eine Abtrenneinrichtung (14), welche zur Abtrennung der jeweiligen Baumaterialpartikelfraktionen (11 - 13) aus dem Partikel-Gemisch (10) vermittels Sichtung eingerichtet ist, wobei die Abtrenneinrichtung (14) wenigstens drei jeweils der Abtrennung einer bestimmten Baumaterialpartikelfraktion (11 - 13) dienende Abtrennbereiche (15 - 17) umfasst.

## Beschreibung

Die Erfindung betrifft eine Vorrichtung zur additiven Herstellung dreidimensionaler Bauteile durch sukzessives schichtweises selektives Belichten und damit einhergehendes Verfestigen von Baumaterialschichten aus einem vermittels eines Energiestrahls verfestigbaren Baumaterials in einer Prozesskammer, wobei die Prozesskammer von einer von einer Strömungserzeugungseinrichtung erzeugten, insbesondere inerten, Gasströmung durchströmbar oder durchströmt ist, wobei durch die Gasströmung und prozessbedingt entstehende Baumaterialpartikel ein Partikel-Gemisch ausbildbar oder ausgebildet ist, wobei das Partikel-Gemisch wenigstens drei, sich in wenigstens einem Baumaterialpartikelparameter, insbesondere der Partikelgröße und/oder der Partikeldichte, unterscheidende Baumaterialpartikelfraktionen beinhaltet.

Die Entstehung entsprechender, mehrere sich in wenigstens einem Baumaterialpartikelparameter unterscheidende Baumaterialpartikelfraktionen beinhaltender Partikel-Gemische ist im Zusammenhang mit der additiven Herstellung dreidimensionaler Bauteile an sich bekannt. Weiter ist es bekannt, die in entsprechenden Partikel-Gemischen enthaltenen Baumaterialpartikel aus entsprechenden Partikel-Gemischen abzutrennen, um diese zumindest zum Teil wiederzuverwenden.

Besonders kleine, massebedingt in dem Partikel-Gemisch verbleibende Baumaterialpartikel ("Schmauchpartikel") werden dabei typischerweise über eine Filterung des Partikel-Gemischs abgetrennt. Größere, massebedingt nicht in dem Partikel-Gemisch verbleibende Baumaterialpartikel werden einer Siebung unterzogen. Die Siebung ermöglicht eine Abtrennung besonders großer Baumaterialpartikel ("Überkornpartikel"). Vermittels der Siebung ist es bis dato jedoch, jedenfalls nicht zufriedenstellend, möglich, prozessbedingt entstehende Baumaterialpartikel, welche sich von den Partikeln des Ausgangsbaumaterials unterscheiden, mit einer Partikelgröße zwischen den Schmauchpartikeln und den Überkornpartikeln abzutrennen. Eine Wiederverendung dieser Baumaterialpartikel kann die strukturellen Eigenschaften additiv hergestellter Bauteile beeinträchtigen.

Es ist Aufgabe der Erfindung, eine, insbesondere im Hinblick auf eine Abtrennung von Baumaterialpartikeln, welche sich von den Partikeln eines (ursprünglichen) Ausgangsbaumaterials unterscheiden, mit einer Partikelgröße zwischen den Schmauchpartikeln und den Überkornpartikeln, verbesserte Vorrichtung zur additiven Herstellung dreidimensionaler Bauteile anzugeben.

Die Aufgabe wird durch eine Vorrichtung gemäß Anspruch 1 gelöst. Die hierzu abhängigen Ansprüche betreffen mögliche Ausführungsformen der Vorrichtung. Die Aufgabe wird ferner durch ein Verfahren gemäß Anspruch 11 gelöst.

Die hierin beschriebene Vorrichtung ("Vorrichtung") dient zur additiven Herstellung dreidimensionaler Bauteile, d. h. beispielsweise technischer Bauteile bzw. technischer Bauteilgruppen, durch sukzessives schichtweises selektives Belichten und damit einhergehendes Verfestigen von Baumaterialschichten aus einem verfestigbaren Baumaterial vermittels eines Energiestrahls. Vermittels der Vorrichtung durchgeführte additive Bauvorgänge erfolgen in einer der Vorrichtung zugehörigen inertisierbaren Prozesskammer. Die Prozesskammer kann einen Teil einer Gehäusestruktur der Vorrichtung bilden.

Bei der Vorrichtung kann es sich um eine SLM-Vorrichtung, d. h. um eine Vorrichtung zur Durchführung selektiver Laserschmelzverfahren (SLM-Verfahren) oder um eine SLS-Vorrichtung, d. h. um eine Vorrichtung zur Durchführung selektiver Lasersinterverfahren (SLS-Verfahren bzw. LaserCUSING®-Verfahren), handeln. Die selektive Verfestigung jeweiliger selektiv zu verfestigender Baumaterialschichten erfolgt auf Grundlage bauteilbezogener Baudaten. Entsprechende Baudaten beschreiben die geometrisch-konstruktive Gestalt des jeweils additiv herzustellenden Bauteils und können beispielsweise "geslicte" CAD-Daten eines jeweiligen additiv herzustellenden Bauteils beinhalten.

Die Vorrichtung umfasst die zur Durchführung additiver Bauvorgänge typischerweise erforderlichen Funktionskomponenten, d. h. insbesondere eine Energiestrahlerzeugungseinrichtung zur Erzeugung eines Energiestrahls, d. h. insbesondere eines Laserstrahls, zur sukzessiven schichtweisen selektiven Verfestigung einzelner Baumaterialschichten aus einem Baumaterial, d. h. insbesondere einem partikulären bzw. pulverförmigen Metall-, Kunststoff- und/oder Keramikmaterial, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Trägerelements einer Trägereinrichtung oder um eine Baumaterialschicht handeln. Im Allgemeinen ist in einer Bauebene wenigstens eine selektiv zu verfestigende bzw. selektiv verfestigte Baumaterialschicht angeordnet oder ausgebildet.

Eine weitere Funktionskomponente der Vorrichtung ist eine Strömungserzeugungseinrichtung. Die Strömungserzeugungseinrichtung, bei welcher es sich z. B. um eine Gebläse- und/oder Saugeinrichtung handeln kann, ist zur Erzeugung einer die Prozesskammer durchströmenden Gasströmung eingerichtet. Die Gasströmung wird durch ein typischerweise inertes Strömungsgas, d. h. z. B. Argon oder Stickstoff, gebildet. Die Prozesskammer ist demnach von einer von einer Strömungserzeugungseinrichtung erzeugten, insbesondere inerten, Gasströmung durchströmbar bzw. durchströmt. Durch die die Prozesskammer durchströmende Gasströmung und prozessbedingt entstehende, typischerweise nicht verfestigte, Baumaterialpartikel ist ein Partikel-Gemisch, d. h. insbesondere ein Gas-Partikel-Gemisch, ausgebildet, welches wenigstens drei, sich in wenigstens einem Baumaterialpartikelparameter, insbesondere der Partikelgröße bzw. der Partikeldichte, unterscheidende Baumaterialpartikelfraktionen beinhaltet. Bei den prozessbedingt entstehenden, Baumaterialpartikeln handelt es sich typischerweise um so genannten "Schmauch" bzw. "Schweiß- oder Sinterspritzer". Der Schmauch bzw. die Schweißspritzer umfassen einen sehr großen Bereich an unterschiedlich großen und/oder dichten Baumaterialpartikeln und somit unterschiedliche Baumaterialpartikelfraktionen. Die Baumaterialpartikel können sonach in die im Weiteren näher beschriebenen Baumaterialpartikelfraktionen unterteilt werden.

Die Vorrichtung umfasst weiterhin eine Abtrenneinrichtung. Die Abtrenneinrichtung ist zur Abtrennung der jeweiligen Baumaterialpartikelfraktionen aus dem Partikel-Gemisch vermittels Sichtung bzw. Sichtens eingerichtet. Unter Sichtung bzw. Sichten ist eine Klassierung von Baumaterialpartikeln nach bestimmten Baumaterialpartikelparametern, wie z. B. Partikelgröße, Dichte, Trägheit und dem sich daraus ergebenden Schwebe- bzw. Schichtungsverhalten zu verstehen. Die Abtrenneinrichtung kann insofern auch als Sichtungseinrichtung bezeichnet bzw. erachtet werden. Die Abtrenneinrichtung umfasst wenigstens drei jeweils der Abtrennung einer bestimmten Baumaterialpartikelfraktion dienende Abtrennbereiche. Jeder Abtrennbereich ist sonach einer bestimmten Baumaterialpartikelfraktion zugeordnet, welche über den jeweiligen Abtrennbereich aus dem Partikel-Gemisch abtrennbar ist. Die Abtrennung der jeweiligen Baumaterialpartikelfraktion aus dem Partikel-Gemisch erfolgt vermittels der Abtrenneinrichtung derart, dass das die in jeweiligen Abtrennbereichen abzutrennenden Baumaterialpartikelfraktionen beinhaltende Partikel-Gemisch durch die Abtrenneinrichtung strömt und sich die den einzelnen Baumaterialpartikelfraktionen zuzuordnenden Baumaterialpartikel aufgrund ihrer unterschiedlichen Baumaterialpartikelparameter, insbesondere aufgrund ihrer unterschiedlichen Partikelgröße bzw. -dichte bzw. des sich hieraus ergebenden unterschiedlichen Schwebe- bzw. Schichtungsverhaltens, in den jeweiligen Abtrennbereichen abtrennen (lassen). Typischerweise wird die Baumaterialpartikelfraktion mit den größten bzw. dichtesten Baumaterialpartikeln zuerst abgetrennt, danach die Baumaterialpartikelfraktion mit den zweitgrößten bzw. zweitdichtesten Baumaterialpartikeln und danach die Baumaterialpartikelfraktion mit den drittgrößten bzw. drittdichtestens Baumaterialpartikeln.

Ein erster Abtrennbereich dient typischerweise der Abtrennung einer ersten Baumaterialpartikelfraktion. Die erste Baumaterialpartikelfraktion beinhaltet (im Wesentlichen) Baumaterialpartikel mit einer im Hinblick auf eine durch eine untere und eine obere Grenzpartikelgröße bzw. eine untere und eine obere Grenzpartikeldichte definierte Partikelverteilung unterhalb der unteren Grenzpartikelgröße bzw. unterhalb der unteren Grenzpartikeldichte liegenden Partikelgröße bzw. Partikeldichte. Die erste Baumaterialpartikelfraktion beinhaltet insbesondere die Schmauchpartikel.

Ein zweiter Abtrennbereich dient typischerweise der Abtrennung einer zweiten Baumaterialpartikelfraktion. Die zweite Baumaterialpartikelfraktion beinhaltet (im Wesentlichen) Baumaterialpartikel mit einer im Hinblick auf eine durch eine untere und eine obere Grenzpartikelgröße bzw. eine untere und eine obere Grenzpartikeldichte definierte Partikelverteilung zwischen der unteren und der oberen Grenzpartikelgröße bzw. zwischen der unteren und der oberen Grenzpartikeldichte liegenden Partikelgröße bzw. Partikeldichte. Die zweite Baumaterialpartikelfraktion beinhaltet insbesondere die, typischerweise bereits teilweise an- oder aufgeschmolzenen, Unterkornpartikel.

Ein dritter Abtrennbereich dient der Abtrennung einer dritten Baumaterialpartikelfraktion. Die dritte Baumaterialpartikelfraktion beinhaltet (im Wesentlichen) Baumaterialpartikel mit einer im Hinblick auf eine durch eine untere und eine obere Grenzpartikelgröße bzw. eine untere und eine obere Partikeldichte definierte Partikelverteilung oberhalb der oberen Grenzpartikelgröße bzw. oberhalb der oberen Grenzpartikeldichte liegenden Partikelgröße bzw. Partikeldichte. Die dritte Baumaterialpartikelfraktion beinhaltet insbesondere die, typischerweise bereits teilweise an- oder aufgeschmolzenen, Überkornpartikel.

Die Begriffe "Unterkornpartikel" und "Überkornpartikel" beziehen sich auf einen bis dato üblichen Siebvorgang, in welchem die Baumaterialpartikel (Unterkornpartikel) der zweiten Baumaterialpartikelfraktion von den Baumaterialpartikeln (Überkornpartikel) der dritten Baumaterialfraktion getrennt wurden.

Eine konkrete Partikelgrößenverteilung eines jeweiligen Baumaterials ist in Abhängigkeit des jeweiligen Baumaterials festzulegen bzw. festgelegt. Eine beispielhafte Partikelgrößenverteilung eines beispielhaften Baumaterials beinhaltet Baumaterialpartikel mit einer Partikelgröße zwischen 10 und 45 bzw. 50 µm. Die Partikelgrößenverteilung ist demnach durch eine untere Grenzpartikelgröße von 10 µm und eine obere Grenzpartikelgröße von 45 bzw. 50 µm definiert. Für eine solche Partikelgrößenverteilung beinhaltet die erste Baumaterialpartikelfraktion Baumaterialpartikel mit einer Partikelgröße unterhalb 10 µm, die zweite Baumaterialpartikelfraktion Baumaterialpartikel mit einer Partikelgröße zwischen 10 und 45 bzw. 50 µm, und die dritte Baumaterialpartikelfraktion Baumaterialpartikel mit einer Partikelgröße oberhalb 45 bzw. 50 µm.

Durch die beschriebene fraktionierte Abtrennung der einzelnen Baumaterialpartikelfraktion aus einem entsprechenden Partikel-Gemisch ist eine verbesserte Vorrichtung realisiert. Die im Zusammenhang mit dem eingangs dargestellten Stand der Technik beschriebene Schwierigkeit, wonach es vermittels Siebung bis dato, jedenfalls nicht zufriedenstellend, möglich war, Baumaterialpartikel mit einer Partikelgröße bzw. -dichte zwischen den Schmauchpartikeln und den Überkornpartikeln, welche sich von den Partikeln eines (ursprünglichen) Ausgangsbaumaterials unterscheiden und somit in ihren Eigenschaften von dem Ausgangsmaterial abweichen, abzutrennen, ist damit begegnet. Baumaterialpartikel mit einer Partikelgröße zwischen den Schmauchpartikeln und den Überkornpartikeln, d. h. Baumaterialpartikel der zweiten Baumaterialpartikelfraktion, können gezielt abgetrennt werden, eine Wiederverwendung dieser Baumaterialpartikel(fraktion) kann ausgeschlossen werden.

Die Abtrenneinrichtung bzw. die dieser zugehörigen Abtrennbereiche, wie sich im Weiteren ergibt, insbesondere der zweite und dritte Abtrennbereich, kann bzw. können in einem Pulvermodul angeordnet oder ausgebildet sein. Das Pulvermodul umfasst eine Pulverkammer. Die Pulverkammer umfasst einen durch Pulverkammerwandungen definierten Pulverkammerraum. Konkret ist der Pulverkammerraum zumindest seitlich durch Pulverkammerwandungen der in der Regel hohlquaderartig bzw. hohlzylinderartig ausgebildeten Pulverkammer begrenzt. Bodenseitig ist der Pulverkammerraum typischerweise durch eine Trageinrichtung begrenzt. Bei der Trageinrichtung kann es sich um eine Pulverkammerplatte bzw. einen eine solche lagernden Pulverkammertisch handeln. Die Trageinrichtung ist typischerweise zwischen zwei Endstellungen, d. h. zwischen einer (bezogen auf die Höhe des Pulvermoduls) oberen und einer unteren Endstellung, relativ zu der Pulverkammer bewegbar gelagert; die bewegbare Lagerung der Trageinrichtung ist typischerweise durch eine mit dieser gekoppelte, insbesondere (elektro)motorische, Antriebs- bzw. Aktoreinrichtung realisiert.

Bei dem Pulvermodul kann es sich insbesondere um ein Auffang- oder Überlaufmodul, welches im Rahmen der Durchführung additiver Herstellungsprozesse mit nicht verfestigtem Baumaterial befüllbar ist, handeln.

Ein bzw. der erste(r) Abtrennbereich, welcher zur Abtrennung der bzw. einer ersten Baumaterialpartikelfraktion aus dem Partikel-Gemisch dient, kann einen von einer Gasströmung, z. B. vertikal, durchströmbaren oder durchströmten Strömungsabschnitt umfassen. Der Strömungsabschnitt kann einen, z. B. vertikal ausgerichteten, Strömungskanal bilden. Der Strömungsabschnitt kommuniziert (unmittelbar oder mittelbar, d. h. unter Zwischenschaltung wenigstens eines weiteren einen Strömungsabschnitt definierenden Strömungselements) mit einer diesem nachgeschalteten, typischerweise ebenso eine Funktionskomponente der Vorrichtung bildenden, Filtereinrichtung. Die Filtereinrichtung ist zur Abtrennung von in der Gasströmung enthaltenen Baumaterialpartikeln der ersten Baumaterialpartikelfraktion aus der Gasströmung vermittels Filterung eingerichtet. Der erste Abtrennbereich ist typischerweise sich zumindest abschnittsweise, z. B. vertikal, durch die Prozesskammer erstreckend innerhalb der Prozesskammer angeordnet oder ausgebildet. Der erste Abtrennbereich ist typischerweise oberhalb des zweiten Abtrennbereichs angeordnet oder ausgebildet. Bei den in dem ersten Abtrennbereich aus dem Partikel-Gemisch - typischerweise handelt es sich hierbei um eine aus dem Partikel-Gemisch, aus welchem vermittels der übrigen Abtrennbereiche bereits die zweite und die dritte Baumaterialpartikelfraktion abgetrennt wurde, resultierende Gasströmung - abtrennbaren Baumaterialpartikeln handelt es typischerweise um Schmauchpartikel, welche vermittels der Filtereinrichtung aus der Gasströmung abgetrennt werden.

Ein bzw. der zweite(r) Abtrennbereich, welcher zur Abtrennung der bzw. einer zweiten Baumaterialpartikelfraktion aus dem Partikel-Gemisch dient, kann ein, insbesondere innerhalb des Pulvermoduls, d. h. innerhalb des Pulverkammerraums, angeordnetes oder ausgebildetes Abtrennelement umfassen. Typischerweise definiert das Abtrennelement einen oberhalb dieses liegenden oberen Pulverkammer(teil)raum und einen unterhalb dieses liegenden unteren Pulverkammer(teil)raum.

Das Abtrennelement kann eine plattenartige bzw. -förmige geometrisch-konstruktive Gestalt aufweisen. Hierunter sind neben (geometrisch) ebenen bzw. planen Ausgestaltungen auch (geometrisch) gewölbte oder mehrschenklig gewinkelte, d. h. z. B. L-, U- oder V-förmig gewinkelte, einen Sammelbereich für Baumaterialpartikel der abzutrennenden zweiten Baumaterialpartikelfraktion definierende Ausgestaltungen denkbar.

Für das Beispiel eines Abtrennelements mit einer querschnittlich betrachtet L-förmig - der Begriff "L-förmig beinhaltet selbstverständlich auch gewisse geometrische Abwandlungen von einem "L" - gewinkelten geometrisch-konstruktiven Gestalt gilt insbesondere Folgendes: Der lange Schenkel des "L"s ist (im Wesentlichen) horizontal ausgerichtet und erstreckt sich von einer ersten Pulverkammerwandung in Richtung einer dieser gegenüber liegend angeordneten zweiten Pulverkammerwandung. Der kurze Schenkel des "L"s ist (im Wesentlichen) vertikal ausgerichtet. Es handelt sich insgesamt um ein "liegendes L". Durch die beiden Schenkel des "L"s und die erste Pulverkammerwandung ist ein (taschenartiger) Sammelbereich für Baumaterialpartikel der abzutrennenden zweiten Baumaterialpartikelfraktion definiert.

Für das Beispiel eines Abtrennelements mit einer querschnittlich betrachtet U-förmig - der Begriff "U-förmig beinhaltet selbstverständlich auch gewisse geometrische Abwandlungen von einem "U" - gewinkelten geometrisch-konstruktiven Gestalt gilt insbesondere Folgendes: Die beiden langen Schenkel des "U"s sind (im Wesentlichen) vertikal ausgerichtet, wobei sich ein erster langer Schenkel des "U"s benachbart zu einer ersten Pulverkammerwandung parallel zu dieser erstreckt bzw. durch die erste Pulverkammerwandung gebildet ist und sich ein zweiter langer Schenkel des "U"s benachbart zu einer der ersten Pulverkammerwandung gegenüber liegend angeordneten zweiten Pulverkammerwandung parallel zu dieser erstreckt. Der kurze Schenkel des "U"s ist (im Wesentlichen) vertikal ausgerichtet und erstreckt sich von der ersten Pulverkammerwandung in Richtung der dieser gegenüber liegend angeordneten zweiten Pulverkammerwandung. Es handelt sich insgesamt um ein "nach oben offenes U". Durch die Schenkel des "U"s ist ein (taschenartiger) Sammelbereich für Baumaterialpartikel der abzutrennenden zweiten Baumaterialpartikelfraktion definiert. Eine analoge geometrisch-konstruktive Gestalt ergibt sich für ein Abtrennelement mit einer querschnittlich betrachtet V-förmig gewinkelten Gestalt.

Ein bzw. der dritte(r) Abtrennbereich zur Abtrennung einer dritten Baumaterialpartikelfraktion ist typischerweise unterhalb des zweiten Abtrennbereichs angeordnet oder ausgebildet. Wie erwähnt, definiert das Abtrennelement einen oberhalb dieses liegenden oberen Pulverkammer(teil)raum und einen unterhalb dieses liegenden unteren Pulverkammer(teil)raum; der dritte Abtrennbereich ist typischerweise in dem unterhalb des Abtrennelements befindlichen unteren Pulverkammer(teil)raum angeordnet oder ausgebildet.

Um eine Zugangsmöglichkeit in den dritten Abtrennbereich zu schaffen, ist zwischen dem den zweiten Abtrennbereich bildenden Abtrennelement und einer (diesem gegenüber liegenden) Pulverkammerwandung ein Spaltraum definiert, welcher eine Zugangsmöglichkeit in den dritten Abtrennbereich bildet.

Das Abtrennelement kann in wenigstens einem, insbesondere linearen, Bewegungsfreiheitsgrad relativ zu der Pulverkammerwandung und/oder relativ zu einem, insbesondere durch eine Trageinrichtung gebildeten, Boden der Pulverkammer bewegbar gelagert sein, wobei der Spaltraum, insbesondere dessen lichten Weite (horizontale Erstreckung) und/oder dessen Länge (vertikale Erstreckung), durch Bewegungen des Abtrennelements relativ zu der Pulverkammerwandung und/oder dem Boden der Pulverkammer variierbar ist. Mithin lässt sich die Abtrenneinrichtung durch Variation des Spaltraums auf unterschiedliche Baumaterialpartikelfraktionen bzw. auf unterschiedliche Baumaterialpartikelfraktionen beinhaltende Partikel-Gemische anpassen. Bewegungen des Abtrennelements können über eine mit diesem gekoppelte, insbesondere (elektro)motorische Antriebseinrichtung realisiert sein. Bei Bewegungen des Abtrennelements kann es sich z. B. um Schiebebewegungen entlang einer, insbesondere horizontalen, Bewegungsbahn oder um Schwenkbewegungen um eine, insbesondere horizontal ausgerichtete, Schwenkachse handeln.

Unabhängig von der konkreter geometrisch-konstruktiver Ausgestaltung jeweiliger Abtrennbereiche kann der dritte Abtrennbereich, insbesondere der eine Zugangsmöglichkeit in den dritten Abtrennbereich bildende Spaltraum, dem zweiten Abtrennbereich gasstromabwärts vorgeschaltet sein und der zweite Abtrennbereich dem ersten Abtrennbereich gasstromabwärts vorgeschaltet sein. Das durch die Abtrenneinrichtung strömende Partikel-Gemisch passiert sonach zunächst den dritten Abtrennbereich, in welchem eine Abtrennung der dritten Baumaterialpartikelfraktion erfolgt, bzw. den eine Zugangsmöglichkeit in den dritten Abtrennbereich bildenden Spaltraum, danach den zweiten Abtrennbereich, in welchem eine Abtrennung der zweiten Baumaterialpartikelfraktion erfolgt, und danach den ersten Abtrennbereich, in welchem eine Abtrennung der ersten Baumaterialpartikelfraktion erfolgt.

Die Vorrichtung kann eine zusätzliche Strömungserzeugungseinrichtung umfassen. Die zusätzliche Strömungserzeugungseinrichtung ist zur Erzeugung einer die Strömung der zweiten Baumaterialpartikelfraktion in Richtung des zweiten Abtrennbereichs beeinflussenden Transportströmung, insbesondere über den Spaltraum hinweg, eingerichtet. Durch die zusätzliche Strömungserzeugungseinrichtung kann die Strömung, insbesondere die Strömungsgeschwindigkeit, des durch die Abtrenneinrichtung strömenden Partikel-Gemischs gezielt beeinflusst werden. Über eine gezielte Beeinflussung der Strömung des Partikel-Gemischs kann wiederum die Abtrennung jeweiliger Baumaterialpartikelfraktionen gezielt beeinflusst werden. Beispielsweise können bestimmte Baumaterialpartikel, welche ohne Beeinflussung der Strömung des Partikel-Gemischs in dem dritten Abtrennbereich abgetrennt würden, durch Beeinflussung der Strömung des Partikel-Gemischs in dem zweiten Abtrennbereich abgetrennt werden. Die Strömungserzeugungseinrichtung umfasst typischerweise wenigstens ein, insbesondere düsenartiges, Strömungserzeugungselement, über welches eine, typischerweise inerte, zusätzliche Schutzgasströmung erzeugbar ist.

Die Erfindung betrifft ferner ein Verfahren zur additiven Herstellung dreidimensionaler Bauteile durch sukzessives schichtweises selektives Belichten und damit einhergehendes Verfestigen von Baumaterialschichten aus einem vermittels eines Energiestrahls verfestigbaren Baumaterials in einer Prozesskammer, wobei die Prozesskammer von einer von einer Strömungserzeugungseinrichtung erzeugten, insbesondere inerten, Gasströmung durchströmt wird, wobei durch die Gasströmung und sich prozessbedingt entstehende Baumaterialpartikel ein -Partikel-Gemisch ausgebildet wird, wobei das Partikel-Gemisch mehrere, insbesondere wenigstens drei, sich in wenigstens einem Baumaterialpartikelparameter, insbesondere der Partikelgröße und/oder der Partikeldichte, unterscheidende Baumaterialpartikelfraktionen beinhaltet. Das Verfahren zeichnet sich dadurch aus, dass zur Abtrennung der jeweiligen Baumaterialpartikelfraktionen aus dem Partikel-Gemisch eine Abtrenneinrichtung verwendet wird, welche zur Abtrennung der jeweiligen Baumaterialpartikelfraktionen aus dem Partikel-Gemisch vermittels Sichtung eingerichtet ist, wobei die Abtrenneinrichtung mehrere, insbesondere wenigstens drei, jeweils der Abtrennung einer bestimmten Baumaterialpartikelfraktion dienende Abtrennbereiche umfasst. Mithin gelten sämtliche Ausführungen im Zusammenhang mit der Vorrichtung analog für das Verfahren.

Die Erfindung ist anhand von Ausführungsbeispielen in den Zeichnungsfiguren näher erläutert. Dabei zeigen:

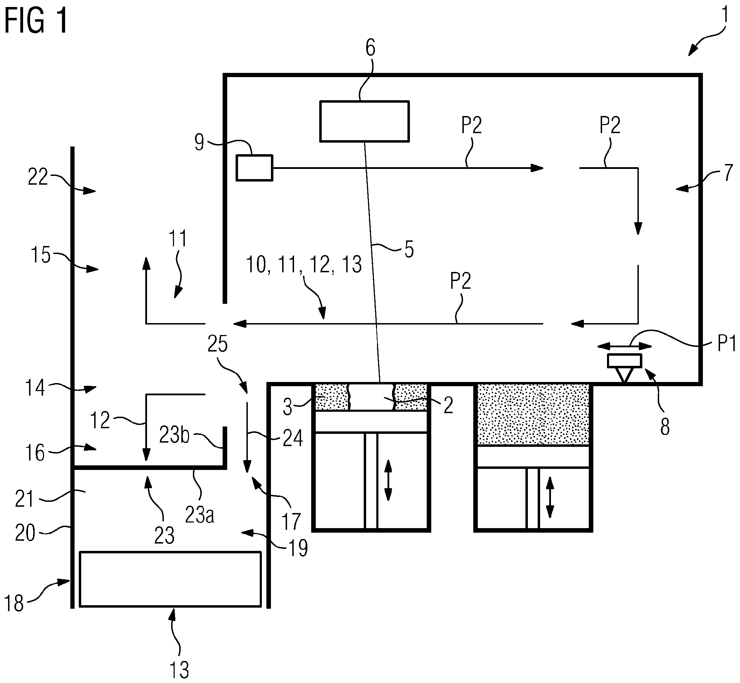

- Fig. 1 - 3: je eine Prinzipdarstellung einer Vorrichtung gemäß einem Ausführungsbeispiel.

Fig. 1 zeigt eine Prinzipdarstellung einer Vorrichtung 1 gemäß einem Ausführungsbeispiel. Die Vorrichtung 1 dient der additiven Herstellung dreidimensionaler Bauteile 2, d. h. beispielsweise technischer Bauteile bzw. technischer Bauteilgruppen, durch sukzessives schichtweises selektives Belichten und damit einhergehendes Verfestigen von Baumaterialschichten aus einem verfestigbaren Baumaterial 3 vermittels eines von einer Energiestrahlerzeugungseinrichtung 4 erzeugten Energiestrahls 5. Bei der Vorrichtung 1 handelt es sich insbesondere um eine SLM-Vorrichtung, d. h. um eine Vorrichtung zur Durchführung selektiver Laserschmelzverfahren (SLM-Verfahren). Bei dem Energiestrahl 5 handelt es sich demnach insbesondere um einen Laserstrahl und bei dem Baumaterial 3 insbesondere um ein partikuläres bzw. pulverförmiges Metall, wie z. B. Aluminium, Edelstahl oder Titan. Die selektive Verfestigung jeweiliger zu verfestigender Baumaterialschichten erfolgt auf Grundlage von bauteilbezogenen Baudaten. Entsprechende Baudaten beschreiben die geometrische bzw. geometrisch-konstruktive Gestalt des jeweils additiv herzustellenden Bauteils 2. Entsprechende Baudaten können beispielsweise "geslicte" CAD-Daten des herzustellenden Bauteils 2 beinhalten.

Die Vorrichtung 1 umfasst eine inertisierbare Prozesskammer 7. Die Prozesskammer 7 kann einen Teil einer Gehäusestruktur (nicht näher bezeichnet) der Vorrichtung 1 bilden. In der Prozesskammer 7 sind die zur Durchführung additiver Bauvorgänge erforderlichen Funktionskomponenten, d. h. insbesondere die Energiestrahlerzeugungseinrichtung 4 und eine, wie durch den horizontal ausgerichteten Doppelpfeil P1 angedeutet, bewegbar gelagerte Beschichtereinrichtung 8 zur Ausbildung zu verfestigender Baumaterialschichten in einer Bauebene angeordnet bzw. ausgebildet.

Eine weitere Funktionskomponente der Vorrichtung 1 ist eine Strömungserzeugungseinrichtung 9 in Form einer Gebläse- und/oder Saugeinrichtung. Die Strömungserzeugungseinrichtung 9 ist zur Erzeugung einer die Prozesskammer 7 durchströmenden, durch die Pfeile P2 angedeuteten Gasströmung eingerichtet. Die Gasströmung wird durch ein inertes Strömungsgas, d. h. z. B. Argon oder Stickstoff, gebildet. Die Prozesskammer 7 ist demnach von der durch die Strömungserzeugungseinrichtung 9 erzeugten inerten, Gasströmung durchströmt. Durch die Gasströmung und prozessbedingt entstehende, typischerweise nicht verfestigte Baumaterialpartikel ist ein Partikel-Gemisch 10 ausgebildet, welches wenigstens drei, sich in wenigstens einem Baumaterialpartikelparameter, insbesondere der Partikelgröße und/oder der Partikeldichte, unterscheidende Baumaterialpartikelfraktionen 11, 12, 13 beinhaltet. Bei den prozessbedingt entstehenden Baumaterialpartikeln handelt es sich typischerweise um so genannten "Schmauch" bzw. "Schweiß- oder Sinterspritzer". Der Schmauch bzw. die Schweißspritzer umfassen einen sehr großen Bereich an unterschiedlich großen bzw. dichten Baumaterialpartikeln und somit unterschiedliche Baumaterialpartikelfraktionen.

Die Vorrichtung 1 umfasst weiterhin eine Abtrenneinrichtung 14. Die Abtrenneinrichtung 14 ist zur Abtrennung der jeweiligen Baumaterialpartikelfraktionen 11 - 13 aus dem Partikel-Gemisch 10 vermittels Sichtung bzw. Sichtens eingerichtet. Die Abtrenneinrichtung 14 umfasst drei jeweils der Abtrennung einer bestimmten Baumaterialpartikelfraktion 11 - 13 dienende Abtrennbereiche 15 - 17. Jeder Abtrennbereich 15 - 17 ist sonach einer bestimmten Baumaterialpartikelfraktion 11 - 13 zugeordnet, welche über den jeweiligen Abtrennbereich 15 - 17 aus dem Partikel-Gemisch 10 abtrennbar ist. Die Abtrennung der jeweiligen Baumaterialpartikelfraktion 11 - 13 aus dem Partikel-Gemisch 10 erfolgt vermittels der Abtrenneinrichtung 14 derart, dass das Partikel-Gemisch 10 durch die Abtrenneinrichtung 14 strömt und sich die den einzelnen Baumaterialpartikelfraktionen 11 - 13 zuzuordnenden Baumaterialpartikel aufgrund ihrer unterschiedlichen Baumaterialpartikelparameter, insbesondere aufgrund ihrer unterschiedlichen Partikelgröße bzw. -dichte bzw. des sich hieraus ergebenden unterschiedlichen Schwebe- bzw. Schichtungsverhaltens, in den jeweiligen Abtrennbereichen 15 - 17 abtrennen (lassen). Typischerweise wird die Baumaterialpartikelfraktion 13 mit den größten bzw. dichtesten Baumaterialpartikeln zuerst abgetrennt, danach die Baumaterialpartikelfraktion 12 mit den zweitgrößten bzw. zweitdichtesten Baumaterialpartikeln und danach die Baumaterialpartikelfraktion 13 mit den drittgrößten bzw. drittdichtesten Baumaterialpartikeln.

Ein erster Abtrennbereich 15 dient der Abtrennung einer ersten Baumaterialpartikelfraktion 11, welche (im Wesentlichen) Baumaterialpartikel mit einer im Hinblick auf eine durch eine untere und eine obere Grenzpartikelgröße bzw. -dichte definierte Partikelverteilung des Baumaterials 3 unterhalb der unteren Grenzpartikelgröße bzw. -dichte liegenden Partikelgröße bzw. -dichte beinhaltet. Die erste Baumaterialpartikelfraktion 11 beinhaltet insbesondere die Schmauchpartikel. Ein zweiter Abtrennbereich 16 dient der Abtrennung einer zweiten Baumaterialpartikelfraktion 12, welche (im Wesentlichen) Baumaterialpartikel mit einer im Hinblick auf eine durch eine untere und eine obere Grenzpartikelgröße bzw. - dichte definierte Partikelverteilung des Baumaterials 3 zwischen der unteren und der oberen Grenzpartikelgröße bzw. -dichte liegenden Partikelgröße bzw. -dichte beinhaltet. Die zweite Baumaterialpartikelfraktion 12 beinhaltet insbesondere die, typischerweise bereits teilweise an- oder aufgeschmolzenen, Unterkornpartikel. Ein dritter Abtrennbereich 17 dient der Abtrennung einer dritten Baumaterialpartikelfraktion 13, welche (im Wesentlichen) Baumaterialpartikel mit einer im Hinblick auf eine durch eine untere und eine obere Grenzpartikelgröße bzw. -dichte definierte Partikelgrößenverteilung des Baumaterials 3 oberhalb der oberen Grenzpartikelgröße bzw. -dichte liegenden Partikelgröße bzw. -dichte beinhaltet. Die dritte Baumaterialpartikelfraktion 13 beinhaltet insbesondere die, typischerweise bereits teilweise an- oder aufgeschmolzenen, Überkornpartikel. Die Begriffe "Unterkornpartikel" und "Überkornpartikel" beziehen sich auf einen bis dato üblichen Siebvorgang, in welchem die Baumaterialpartikel (Unterkornpartikel) der zweiten Baumaterialpartikelfraktion 12 von den Baumaterialpartikeln (Überkornpartikel) der dritten Baumaterialfraktion 13 getrennt wurden.

Eine beispielhafte Partikelgrößenverteilung eines Baumaterials 3 mit einer Partikelgrößenverteilung zwischen 10 und 45 bzw. 50 µm gilt Folgendes: die erste Baumaterialpartikelfraktion 11 beinhaltet Baumaterialpartikel mit einer Partikelgröße unterhalb 10 µm, die zweite Baumaterialpartikelfraktion 12 beinhaltet Baumaterialpartikel mit einer Partikelgröße zwischen 10 und 45 µm, und die dritte Baumaterialpartikelfraktion 13 beinhaltet Baumaterialpartikel mit einer Partikelgröße oberhalb 45 µm.

Die Abtrenneinrichtung 14 bzw. die dieser zugehörigen Abtrennbereiche 15 - 17 sind in einem Pulvermodul 18 angeordnet bzw. ausgebildet. Bei dem Pulvermodul 18 handelt es sich um ein Auffang- oder Überlaufmodul, welches im Rahmen der Durchführung additiver Herstellungsprozesse mit nicht verfestigtem Baumaterial 3 befüllbar ist. Das Pulvermodul 18 umfasst eine Pulverkammer 19, welche einen durch Pulverkammerwandungen 20 definierten Pulverkammerraum 21 umfasst. Der Pulverkammerraum 21 ist zumindest seitlich durch die Pulverkammerwandungen 20 begrenzt. Bodenseitig kann der Pulverkammerraum 21 durch eine Trageinrichtung (nicht gezeigt) begrenzt sein. Bei der Trageinrichtung kann es sich um eine Pulverkammerplatte bzw. einen eine solche lagernden Pulverkammertisch handeln. Die Trageinrichtung ist typischerweise zwischen zwei Endstellungen, d. h. zwischen einer (bezogen auf die Höhe des Pulvermoduls) oberen und einer unteren Endstellung, relativ zu der Pulverkammer 19 bewegbar gelagert; die bewegbare Lagerung der Trageinrichtung ist typischerweise durch eine mit dieser gekoppelte, insbesondere (elektro)motorische, Antriebs- bzw. Aktoreinrichtung realisiert.

Der erste Abtrennbereich 15, welcher zur Abtrennung der ersten Baumaterialpartikelfraktion 11 aus dem Partikel-Gemisch 10 dient, umfasst einen von einer Gasströmung, z. B. vertikal, durchströmten Strömungsabschnitt 22, welcher einen, z. B. vertikal, ausgerichteten Strömungskanal bildet. Der Strömungsabschnitt 22 kommuniziert mit einer diesem nachgeschalteten, typischerweise ebenso eine Funktionskomponente der Vorrichtung 1 bildenden, Filtereinrichtung (nicht gezeigt). Die Filtereinrichtung ist zur Abtrennung von in der Gasströmung enthaltenen Baumaterialpartikeln der ersten Baumaterialpartikelfraktion 11 aus der Gasströmung vermittels Filterung eingerichtet. Der erste Abtrennbereich 15 ist sich zumindest abschnittsweise, z. B. vertikal, durch die Prozesskammer 7 erstreckend innerhalb der Prozesskammer 7 angeordnet bzw. ausgebildet.

Ersichtlich ist der erste Abtrennbereich 11 oberhalb des zweiten Abtrennbereichs 12 angeordnet. Bei den in dem ersten Abtrennbereich 11 aus dem Partikel-Gemisch 10 - typischerweise handelt es sich hierbei um eine aus dem Partikel-Gemisch 10, aus welchem vermittels der übrigen Abtrennbereiche 16, 17 bereits die zweite und die dritte Baumaterialpartikelfraktion 12, 13 abgetrennt wurde, resultierende Gasströmung - abtrennbaren Baumaterialpartikeln handelt es typischerweise um Schmauchpartikel, welche vermittels der Filtereinrichtung aus der Gasströmung abgetrennt werden.

Der zweite Abtrennbereich 16, welcher zur Abtrennung der zweiten Baumaterialpartikelfraktion 12 aus dem Partikel-Gemisch 10 dient, umfasst ein innerhalb des Pulvermoduls 18, d. h. innerhalb des Pulverkammerraums 21, angeordnetes Abtrennelement 23. Das Abtrennelement 23 definiert einen oberhalb dieses liegenden oberen Pulverkammer(teil)raum und einen unterhalb dieses liegenden unteren Pulverkammer(teil)raum.

Das Abtrennelement 23 weist in dem Ausführungsbeispiel eine querschnittlich betrachtet L-förmig gewinkelte geometrisch-konstruktive Gestalt. Der lange Schenkel 23a des "L"s ist (im Wesentlichen) horizontal ausgerichtet und erstreckt sich von einer ersten (linken) Pulverkammerwandung 20 in Richtung einer dieser gegenüber liegend angeordneten zweiten (rechten) Pulverkammerwandung 20. Der kurze Schenkel 23b des "L"s ist (im Wesentlichen) vertikal ausgerichtet. Es handelt sich insgesamt um ein "liegendes L". Durch die beiden Schenkel 23a, 23b des "L"s und die erste Pulverkammerwandung 20 ist ein (taschenartiger) Sammelbereich für Baumaterialpartikel der abzutrennenden zweiten Baumaterialpartikelfraktion 12 definiert.

Der dritte Abtrennbereich 17, welcher zur Abtrennung der dritten Baumaterialpartikelfraktion 13 eingerichtet ist, ist unterhalb des zweiten Abtrennbereichs 12 angeordnet bzw. ausgebildet. Konkreter ist der dritte Abtrennbereich 17 in dem unterhalb des Abtrennelements 23 befindlichen unteren Pulverkammer(teil)raum angeordnet bzw. ausgebildet. Um eine Zugangsmöglichkeit in den dritten Abtrennbereich 17 zu schaffen, ist zwischen dem Abtrennelement 23, d. h. zwischen dem (durch den kurzen Schenkel 23b gebildeten) freien Ende des Abtrennelements 23, und der (diesem gegenüber liegenden) Pulverkammerwandung 20 ein Spaltraum 24 definiert, welcher eine Zugangsmöglichkeit in den dritten Abtrennbereich 17 bildet.

Aus der vorstehend beschriebenen Anordnung und Ausbildung der Abtrennbereiche 15 - 17 ergibt sich, dass der dritte Abtrennbereich 17, insbesondere der eine Zugangsmöglichkeit in den dritten Abtrennbereich 17 bildende Spaltraum 24, dem zweiten Abtrennbereich 16 gasstromabwärts vorgeschaltet ist und der zweite Abtrennbereich 16 dem ersten Abtrennbereich 15 gasstromabwärts vorgeschaltet ist. Das durch die Abtrenneinrichtung 14 strömende Partikel-Gemisch 10 passiert sonach zunächst den dritten Abtrennbereich 17, in welchem eine Abtrennung der dritten Baumaterialpartikelfraktion 13 erfolgt, bzw. den eine Zugangsmöglichkeit in den dritten Abtrennbereich 17 bildenden Spaltraum 24, danach den zweiten Abtrennbereich 16, in welchem eine Abtrennung der zweiten Baumaterialpartikelfraktion 12 erfolgt, und danach den ersten Abtrennbereich 15, in welchem eine Abtrennung der ersten Baumaterialpartikelfraktion 11 erfolgt.

Die Vorrichtung 1 kann optional eine zusätzliche Strömungserzeugungseinrichtung 25 umfassen. Die zusätzliche Strömungserzeugungseinrichtung 25 ist zur Erzeugung einer die Strömung wenigstens der zweiten Baumaterialpartikelfraktion 12 in Richtung des zweiten Abtrennbereichs 12 beeinflussenden Transportströmung, insbesondere über den Spaltraum 24 hinweg, eingerichtet. Durch die zusätzliche Strömungserzeugungseinrichtung 25 kann die Strömung, insbesondere die Strömungsgeschwindigkeit, des durch die Abtrenneinrichtung 14 strömenden Partikel-Gemischs 10 (lokal) gezielt beeinflusst werden. Über eine gezielte Beeinflussung der Strömung des Partikel-Gemischs 10 kann wiederum die Abtrennung jeweiliger Baumaterialpartikelfraktionen 11 - 13 gezielt beeinflusst werden. Beispielsweise können bestimmte Baumaterialpartikel, welche ohne Beeinflussung der Strömung des Partikel-Gemischs 10 in dem dritten Abtrennbereich 17 abgetrennt würden, durch Beeinflussung der Strömung des Partikel-Gemischs 10 in dem zweiten Abtrennbereich 16 abgetrennt werden. Die zusätzliche Strömungserzeugungseinrichtung 25 umfasst typischerweise wenigstens ein, insbesondere düsenartiges, Strömungserzeugungselement (nicht näher bezeichnet), über welches eine, typischerweise inerte, zusätzliche Schutzgasströmung erzeugbar ist.

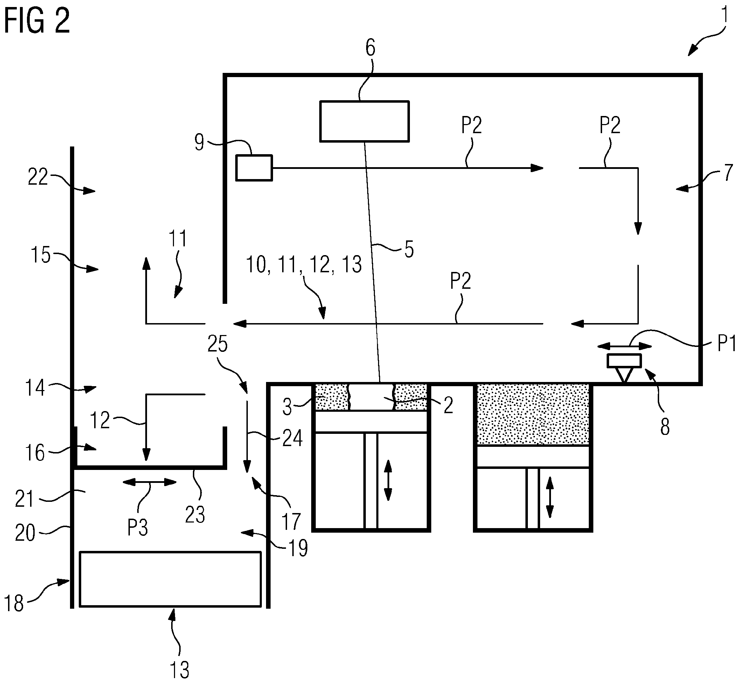

Fig. 2 zeigt eine Prinzipdarstellung einer Vorrichtung 1 gemäß einem weiteren Ausführungsbeispiel. Im Unterschied zu dem Ausführungsbeispiel gemäß Fig. 1 ist das Abtrennelement 23 hier in einem, insbesondere linearen, Bewegungsfreiheitsgrad relativ zu der Pulverkammerwandung 20 bewegbar gelagert. Entsprechend ist der Spaltraum 24, insbesondere dessen lichten Weite, ist durch Bewegungen des Abtrennelements 23 relativ zu der Pulverkammerwandung 20 variierbar. Mithin lässt sich die Abtrenneinrichtung 14 durch Variation des Spaltraums 24 auf unterschiedliche Baumaterialpartikelfraktionen 11 - 13 bzw. auf unterschiedliche Baumaterialpartikelfraktionen 11 - 13 beinhaltende Partikel-Gemische 10 anpassen. Bei Bewegungen des Abtrennelements 23 handelt es sich, wie durch den Doppelpfeil P3 angedeutet z. B. Schiebebewegungen entlang einer, insbesondere horizontalen, Bewegungsbahn. Selbstverständlich wären auch Schwenkbewegungen um eine, insbesondere horizontal ausgerichtete, Schwenkachse denkbar. Alternativ oder ergänzend könnte das Abtrennelement auch in einem, insbesondere linearen, Bewegungsfreiheitsgrad relativ zu dem Boden der Pulverkammer 19 bewegbar gelagert sein. Bewegungen des Abtrennelements 23 können in jedem Fall über eine mit diesem gekoppelte, insbesondere (elektro)motorische Antriebseinrichtung (nicht gezeigt) realisiert sein.

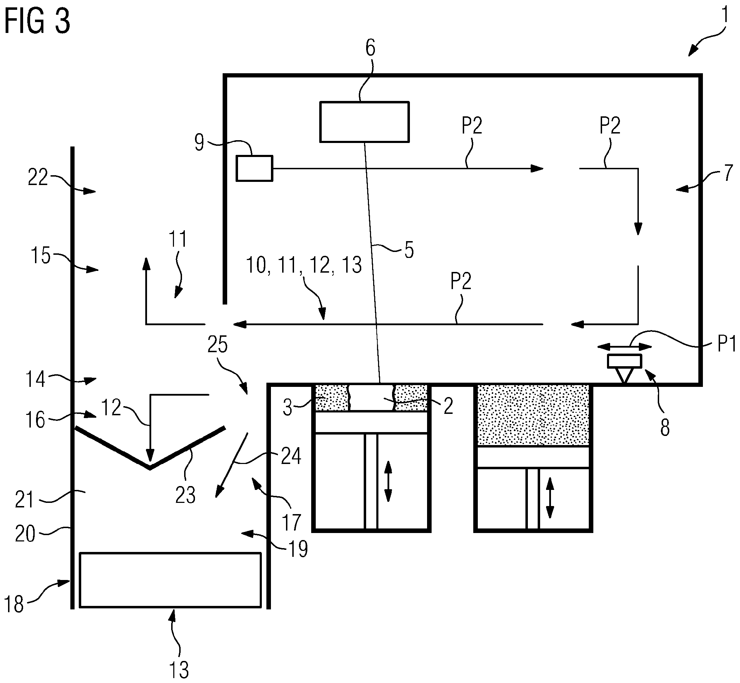

Fig. 3 zeigt eine Prinzipdarstellung einer Vorrichtung 1 gemäß einem weiteren Ausführungsbeispiel. Im Unterschied zu den Ausführungsbeispielen gemäß den Fig. 1, 2 weist das Abtrennelement 23 hier eine querschnittlich betrachtet V-förmig gewinkelte geometrisch-konstruktive Gestalt auf. Auch durch die V-förmig gewinkelte geometrische Gestalt ist ein taschenartiger Sammelbereich für Baumaterialpartikel der abzutrennenden zweiten Baumaterialpartikelfraktion 12 definiert.

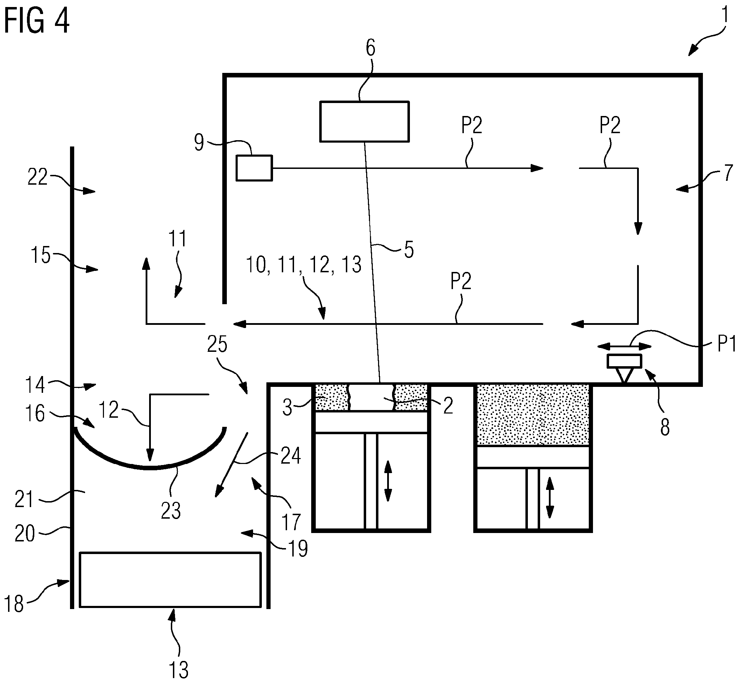

Fig. 4 zeigt eine Prinzipdarstellung einer Vorrichtung 1 gemäß einem weiteren Ausführungsbeispiel. Im Unterschied zu den Ausführungsbeispielen gemäß den Fig. 1 - 3 weist das Abtrennelement 23 hier eine querschnittlich betrachtet gewölbte geometrisch-konstruktive Gestalt auf. Auch durch die gewölbte geometrische Gestalt ist ein taschenartiger Sammelbereich für Baumaterialpartikel der abzutrennenden zweiten Baumaterialpartikelfraktion 12 definiert.

Mit den in den Ausführungsbeispielen gezeigten Vorrichtungen 1 lässt sich ein Verfahren zur additiven Herstellung dreidimensionaler Bauteile 2 durch sukzessives schichtweises selektives Belichten und damit einhergehendes Verfestigen von Baumaterialschichten aus einem vermittels eines Energiestrahls 5 verfestigbaren Baumaterials 3 in einer Prozesskammer 7, wobei die Prozesskammer 7 von einer von einer Strömungserzeugungseinrichtung 9 erzeugten, insbesondere inerten, Gasströmung durchströmt wird, wobei durch die Gasströmung und sich prozessbedingt entstehende Baumaterialpartikel ein Partikel-Gemisch 10 ausgebildet wird, wobei das Partikel-Gemisch 10 wenigstens drei sich in wenigstens einem Baumaterialpartikelparameter, insbesondere der Partikelgröße bzw. der Partikeldichte, unterscheidende Baumaterialpartikelfraktionen 11 - 13 beinhaltet, implementieren. Das Verfahren zeichnet sich dadurch aus, dass zur Abtrennung der jeweiligen Baumaterialpartikelfraktionen 11 - 13 aus dem Partikel-Gemisch 10 eine Abtrenneinrichtung 14 verwendet wird, welche zur Abtrennung der jeweiligen Baumaterialpartikelfraktionen 11 - 13 aus dem Partikel-Gemisch 10 vermittels Sichtung eingerichtet ist, wobei die Abtrenneinrichtung 14 wenigstens drei, jeweils der Abtrennung einer bestimmten Baumaterialpartikelfraktion 11 - 13 dienende Abtrennbereiche 15 - 17 umfasst.

## Patentansprüche

1. Vorrichtung (1) zur additiven Herstellung dreidimensionaler Bauteile durch sukzessives schichtweises selektives Belichten und damit einhergehendes Verfestigen von Baumaterialschichten aus einem vermittels eines Energiestrahls (5) verfestigbaren Baumaterial (3) in einer Prozesskammer (7), wobei die Prozesskammer (7) von einer von einer Strömungserzeugungseinrichtung (9) erzeugten, insbesondere inerten, Gasströmung durchströmbar oder durchströmt ist, wobei durch die Gasströmung und prozessbedingt entstehende Baumaterialpartikel ein Partikel-Gemisch (10) ausbildbar oder ausgebildet ist, wobei das Partikel-Gemisch (10) wenigstens drei, sich in wenigstens einem Baumaterialpartikelparameter, insbesondere der Partikelgröße und/oder der Partikeldichte, unterscheidende Baumaterialpartikelfraktionen (11 - 13) beinhaltet, **gekennzeichnet durch**
eine Abtrenneinrichtung (14), welche zur Abtrennung der jeweiligen Baumaterialpartikelfraktionen (11 - 13) aus dem Partikel-Gemisch (10) vermittels Sichtung eingerichtet ist, wobei die Abtrenneinrichtung (14) wenigstens drei jeweils der Abtrennung einer bestimmten Baumaterialpartikelfraktion (11 - 13) dienende Abtrennbereiche (15 - 17) umfasst.

2. Vorrichtung nach Anspruch 1, **dadurch gekennzeichnet, dass** ein erster Abtrennbereich (15) der Abtrennung einer ersten Baumaterialpartikelfraktion (11) dient, wobei die erste Baumaterialpartikelfraktion (11) Baumaterialpartikel mit einer im Hinblick auf eine durch eine untere und eine obere Grenzpartikelgröße oder Grenzpartikeldichte definierte Partikelgrößenverteilung des Baumaterials (3) unterhalb der unteren Grenzpartikelgröße oder Grenzpartikeldichte liegenden Partikelgröße beinhaltet, und
ein zweiter Abtrennbereich (16) der Abtrennung einer zweiten Baumaterialpartikelfraktion (12) dient, wobei die zweite Baumaterialpartikelfraktion (12) Baumaterialpartikel mit einer im Hinblick auf eine durch eine untere und eine obere Grenzpartikelgröße oder Grenzpartikeldichte definierte Partikelverteilung des Baumaterials (3) zwischen der unteren und der oberen Grenzpartikelgröße oder Grenzpartikeldichte liegenden Partikelgröße oder Partikeldichte beinhaltet,
ein dritter Abtrennbereich (17) der Abtrennung einer dritten Baumaterialpartikelfraktion (13) dient, wobei die dritte Baumaterialpartikelfraktion (13) Baumaterialpartikel mit einer im Hinblick auf eine durch eine untere und eine obere Grenzpartikelgröße oder Grenzpartikeldichte definierte Partikelverteilung des Baumaterials (3) oberhalb der oberen Grenzpartikelgröße oder Grenzpartikeldichte liegenden Partikelgröße oder Partikeldichte beinhaltet.

3. Vorrichtung nach Anspruch 1 oder 2, **dadurch gekennzeichnet, dass** die Abtrenneinrichtung (14) in einem Pulvermodul (18), insbesondere in einem Auffang-oder Überlaufmodul, angeordnet oder ausgebildet ist, wobei das Pulvermodul (18) eine Pulverkammer (19) umfasst, welche einen durch Pulverkammerwandungen (20) definierten Pulverkammerraum (21) umfasst.

4. Vorrichtung nach einem der vorhergehenden Ansprüche, **dadurch gekennzeichnet, dass** ein erster Abtrennbereich (15) zur Abtrennung einer ersten Baumaterialpartikelfraktion (11) einen von einer Gasströmung, insbesondere vertikal, durchströmbaren oder durchströmten Strömungsabschnitt (22) umfasst, welcher mit einer diesem nachgeschalteten Filtereinrichtung kommuniziert, welche zur Abtrennung von in der Gasströmung enthaltenen Baumaterialpartikeln der ersten Baumaterialpartikelfraktion (11) vermittels Filterung eingerichtet ist.

5. Vorrichtung nach einem der vorhergehenden Ansprüche, **dadurch gekennzeichnet, dass** ein zweiter Abtrennbereich (16) zur Abtrennung einer zweiten Baumaterialpartikelfraktion (12) ein, insbesondere innerhalb des oder eines Pulvermoduls (18) angeordnetes oder ausgebildetes, Abtrennelement (23) umfasst.

6. Vorrichtung nach Anspruch 5, **dadurch gekennzeichnet, dass** ein dritter Abtrennbereich (17) zur Abtrennung einer dritten Baumaterialpartikelfraktion (13) unterhalb des zweiten Abtrennbereichs (16) angeordnet oder ausgebildet ist.

7. Vorrichtung nach Anspruch 5 und 6, **dadurch gekennzeichnet, dass** zwischen dem den zweiten Abtrennbereich (12) zur Abtrennung einer zweiten Baumaterialpartikelfraktion (16) bildenden Abtrennelement (23) und einer Pulverkammerwandung (20) ein Spaltraum (24) definiert ist, wobei der Spaltraum (24) eine Zugangsmöglichkeit in den dritten Abtrennbereich (17) bildet.

8. Vorrichtung nach Anspruch 3 und einem der Ansprüche 5 bis 7, **dadurch gekennzeichnet, dass** das Abtrennelement (23) in wenigstens einem, insbesondere linearen, Bewegungsfreiheitsgrad relativ zu der Pulverkammerwandung (20) und/oder relativ einem, insbesondere durch eine Trageinrichtung gebildeten, Boden der Pulverkammer (19) bewegbar gelagert ist, wobei der Spaltraum (24), insbesondere dessen lichten Weite und/oder Länge, durch Bewegungen des Abtrennelements (23) relativ zu der Pulverkammerwandung (20) und/oder dem Boden der Pulverkammer (19) variierbar ist.

9. Vorrichtung nach einem der Ansprüche 2 bis 8, **dadurch gekennzeichnet, dass** der dritte Abtrennbereich (17), insbesondere der eine Zugangsmöglichkeit in den dritten Abtrennbereich (17) bildende Spaltraum (24), dem zweiten Abtrennbereich (16) gasstromabwärts vorgeschaltet ist und der zweite Abtrennbereich (16) dem ersten Abtrennbereich (15) gasstromabwärts vorgeschaltet ist.

10. Vorrichtung nach einem der vorhergehenden Ansprüche, **gekennzeichnet durch** eine zusätzliche Strömungserzeugungseinrichtung (25), welche zur Erzeugung einer die Strömung wenigstens der zweiten Baumaterialpartikelfraktion (12) in Richtung des zweiten Abtrennbereichs (16) beeinflussenden Transportströmung, insbesondere über den Spaltraum (24) hinweg, eingerichtet ist.

11. Verfahren zur additiven Herstellung dreidimensionaler Bauteile (2) durch sukzessives schichtweises selektives Belichten und damit einhergehendes Verfestigen von Baumaterialschichten aus einem vermittels eines Energiestrahls (5) verfestigbaren Baumaterial (3) in einer Prozesskammer (7), wobei die Prozesskammer (7) von einer von einer Strömungserzeugungseinrichtung (9) erzeugten, insbesondere inerten, Gasströmung durchströmt wird, wobei durch die Gasströmung und sich prozessbedingt entstehende Baumaterialpartikel ein Partikel-Gemisch (10) ausgebildet wird, wobei das Partikel-Gemisch (10) wenigstens drei, sich in wenigstens einem Baumaterialpartikelparameter, insbesondere der Partikelgröße und/oder der Partikeldichte, unterscheidende Baumaterialpartikelfraktionen (11 - 13) beinhaltet,
**dadurch gekennzeichnet, dass**
zur Abtrennung der jeweiligen Baumaterialpartikelfraktionen (11 - 13) aus dem Partikel-Gemisch (10) eine Abtrenneinrichtung verwendet wird, welche zur Abtrennung der jeweiligen Baumaterialpartikelfraktionen (11 - 13) aus dem Partikel-Gemisch (10) vermittels Sichtung eingerichtet ist, wobei die Abtrenneinrichtung (14) mehrere, insbesondere wenigstens drei, jeweils der Abtrennung einer bestimmten Baumaterialpartikelfraktion (11 - 13) dienende Abtrennbereiche (15 - 17) umfasst.
